Europäisches Patentamt

European Patent Office

Office européen des brevets

(11) Publication number: **0 102 811**
**B1**

(12) **EUROPEAN PATENT SPECIFICATION**

(45) Date of publication of patent specification: **16.08.90**

(51) Int. Cl.⁵: **H 04 N 5/782**

(21) Application number: **83304892.9**

(22) Date of filing: **24.08.83**

(54) Video signal recording apparatus.

(30) Priority: **25.08.82 JP 147337/82**

(43) Date of publication of application:
**14.03.84 Bulletin 84/11**

(45) Publication of the grant of the patent:
**16.08.90 Bulletin 90/33**

(84) Designated Contracting States:
**AT CH DE FR GB IT LI NL SE**

(56) References cited:
**DE-A-3 131 906**
**GB-A-2 066 613**

**PATENTS ABSTRACTS OF JAPAN, vol. 2, no. 154, 25th December 1978, page 10071 E 78; & JP - A - 53 124 409 (SONY K.K.) 30-10-1978**

**IEEE TRANSACTIONS ON CONSUMER ELECTRONICS, vol. CE-27, no. 3, August 1981, pages 320-328, IEEE, New York, US; K. MOHRI et al.: "A new concept of handy video recording camera"**

(73) Proprietor: **SONY CORPORATION**
**7-35 Kitashinagawa 6-Chome Shinagawa-ku Tokyo 141 (JP)**

(72) Inventor: **Yamagiwa, Kazuo**
**Patent Division, Sony Corp. 7-35 Kitashinagawa-6**
**Shinagawa-ku Tokyo (JP)**
Inventor: **Nishitani, Kiyoshi**
**Patent Division, Sony Corp. 7-35 Kitashinagawa-6**
**Shinagawa-ku Tokyo (JP)**
Inventor: **Takeuchi, Koichi**
**Patent Division, Sony Corp. 7-35 Kitashinagawa-6**
**Shinagawa-ku Tokyo (JP)**
Inventor: **Sato, Seiji**
**Patent Division, Sony Corp. 7-35 Kitashinagawa-6**
**Shinagawa-ku Tokyo (JP)**

(74) Representative: **Thomas, Christopher Hugo et al**
**D Young & Co 10 Staple Inn**
**London WC1V 7RD (GB)**

Courier Press, Leamington Spa, England.

(56) References cited:

IEEE TRANSACTIONS ON CONSUMER ELECTRONICS, vol. CE-27, no. 3, August 1981, pages 331-339, New York, US; M. MORIO et al.: "Development of an extremely small video taperecorder"

FERNSEH UND KINO TECHNIK, vol. 36, no. 5, May 1982, pages 193-194, Berlin, DE; N. BOLEWSKI: "Das "Chroma Trak"- Aufzeichnungssystem"

## Description

This invention relates to video signal recording apparatus, particularly for recording the output of a television camera.

In many forms of domestic video signal recording apparatus, hereinafter referred to as a standard video tape recorder (VTR), a magnetic tape is wrapped around a tape guide drum at a wrap angle, that is a circumferential angle of the drum, slightly larger than 180°. Two rotary heads which are spaced 180° apart on the guide drum are rotated at the frame frequency and the rotary heads alternately contact the magnetic tape which runs at a fixed speed. With the standard VTR of this type, one field of a video signal is recorded in each successive oblique video track on the magnetic tape. On reproduction, these video tracks are alternatively scanned by two similar rotary heads, thereby to reproduce the video signal.

A small and light weight VTR is not only convenient to use, but also permits integration with a television camera. An important factor affecting miniaturization is miniaturization of the tape guide drum and of the mechanical parts of the tape guide path in relation to the tape guide drum.

However, mere reduction of the diameter of the tape guide drum may cause the problem that the recording pattern does not coincide with that of a standard VTR. In the case of a VTR integrally constructed with a television camera, it will be satisfactory for the VTR merely to have a recording function, as reproduction is preferably performed by a standard VTR.

To form the same recording pattern as that of a standard VTR, a magnetic tape may be wrapped at a wrap angle larger than the conventional angle around a tape guide drum having a smaller diameter than that of a standard VTR, the magnetic tape then being scanned using one rotary head. However, to record a video signal with high density, it is necessary to form the adjacent video tracks by means of rotary heads the gaps of which extend in different directions from one another. Therefore, two rotary heads are needed successfully to record a video signal, and in this case, problems arise because of the distance between the gaps.

Moreover, an output signal of a colour video camera is generally encoded into a composite colour video signal, and when it is recorded in the VTR, the composite colour video signal is again separated into a luminance signal and a carrier colour signal. The luminance signal is frequency modulated, and the carrier colour signal is frequency converted into a signal having a carrier frequency which is lower than the original carrier frequency. Therefore, a colour encoder to obtain the composite video signal is needed. The number of filtering and frequency conversion steps causes deterioration of the frequency characteristics and phase characteristics of the colour signal, and generation of a spurious signal.

Our Japanese patent specification JP—A—53 124409 discloses a video signal recording apparatus as set out in the pre-characterizing part of claim 1.

According to the present invention there is provided a video signal recording apparatus comprising a tape guide drum around which a magnetic tape is to be wrapped and a first and a second rotary head arranged to come into contact with said magnetic tape substantially simultaneously, the extending directions of transducing gaps of said heads being different from each other, and the initial time when said first and second rotary heads respectively come into contact with said magnetic tape being synchronized with a vertical sync signal of a recording signal to be supplied from a camera, thereby recording said recording signal on said magnetic tape; characterized in that:

the wrap angle θ of said magnetic tape around said tape guide drum is selected so that:

$$\frac{360°}{\theta} \times \frac{625}{2} = M$$

or

$$\frac{360°}{\theta} \times \frac{525}{2} = N$$

where M and N are integers; and so that:

an angular distance α between the gaps of said first and second rotary heads is selected so as to cause a time difference of $(m + 0.5)T$, where m is an integer and T is a time corresponding to one horizontal period.

The invention will now be described by way of example with reference to the accompanying drawings, in which:

Figure 1 is a schematic diagram showing the arrangement of rotary heads in an embodiment of the invention;

Figure 2 is a front view showing the structure of the rotary heads;

Figure 3 is a schematic diagram for describing a standard VTR having two rotary heads spaced at an angle of 180° apart;

Figure 4 is a schematic diagram showing the recording pattern in an embodiment of the invention;

Figures 5A to 5D are time charts to describe the operation of an embodiment when the wrap angle is 300°;

Figures 6A, 6B, 7A and 7B are schematic diagrams to describe the scanning operation of an image pick-up tube in an embodiment;

Figures 8A and 8B are time charts to describe the operation of another embodiment when the wrap angle is 300°;

Figure 9 is a block diagram showing the basic form of an embodiment of the invention; and

Figure 10 is a block diagram showing the construction of a signal processor.

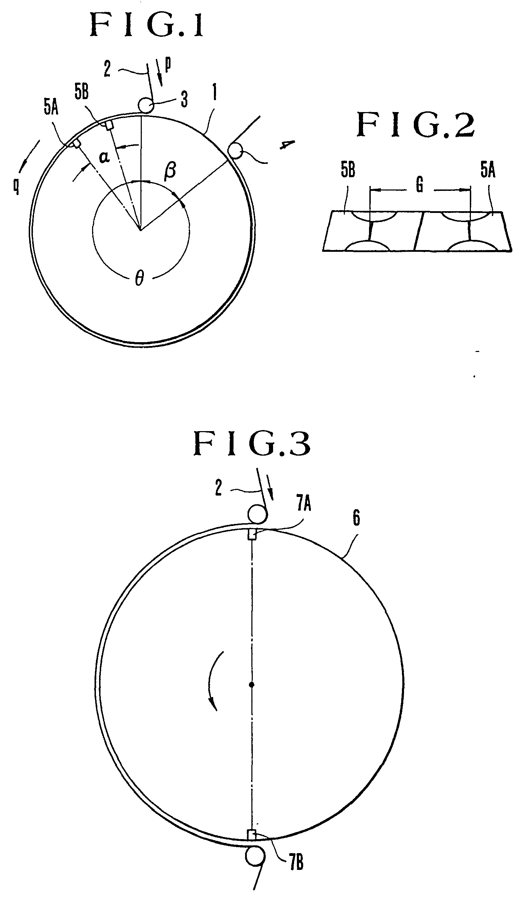

An embodiment of the invention will now be described with reference to the drawings. Referring to Figure 1, a magnetic tape 2 is wrapped around a circumferential surface of a tape guide drum 1 at a wrap angle θ (270° is less than θ is less than 360°). The magnetic tape 2 is wrapped obliquely (that is on the slant) around the circumferential surface of the tape guide drum 1, and in this state, the magnetic tape 2 runs in the direction indicated by an arrow p at a fixed speed, for example 20 mm/sec. Tape guide members 3 and 4 are provided to wrap the magnetic tape 2 around the tape guide drum 1 with a predetermined relation therebetween.

Rotary heads 5A and 5B come into contact with the magnetic tape 2 wrapped around the tape guide drum 1. The rotary heads 5A and 5B are rotated counter-clockwise (in the direction indicated by an arrow q) at a normal field frequency of 1/60 sec for the NTSC form and 1/50 sec for the CCIR form. Although not shown, the tape guide drum 1 comprises fixed upper and lower drums, and a cylindrical head disc arranged to rotate therebetween. The rotary heads 5A and 5B protrude from windows formed in this head disc.

The rotary heads 5A and 5B are constructed in such a manner that the extending directions of the respective transducer gaps are different from each other and upon reproduction, cross-talk components generated from the adjacent tracks are suppressed due to azimuth loss. The rotary heads 5A and 5B are only arranged at the locations spaced an angular distance α apart because they cannot be disposed at the same location. In this embodiment, the angular distance α is selected so that the rotary head 5B is delayed by a time period of only 1.5 T relative to the rotary head 5A. This reference character T indicates one horizontal period modified as expressed by the following equation:

$$f_H' = \frac{360°}{\theta} \cdot f_H$$

$$T = \frac{1}{f_H'}$$

wherein $f_H$ represents a standard horizontal scan frequency in the CCIR or NTSC form.

Since it is necessary to position the rotary heads 5A and 5B very closely, they are in actual construction stuck together as shown in Figure 2, and a distance G between their gaps is set at a fixed value.

Figure 3 shows a rotary two head type VTR of the standard helical scan type to reproduce the video signal recorded by the embodiment.

The magnetic tape 2 is wrapped around the circumferential surface of a tape guide drum 6 at a wrap angle slightly larger than 180°. Two rotary heads 7A and 7B are spaced at an angle of 180° so as to face each other, and they are arranged alternately to come into contact with the magnetic tape 2. The extending directions of the respective gaps of these rotary heads 7A and 7B coincide with those of the rotary heads 5A and 5B. The rotary heads 7A and 7B are rotated at the frame frequency, thereby each reproducing a colour video signal of one field. The running speed of the magnetic tape 2 is equal to the speed in the embodiment.

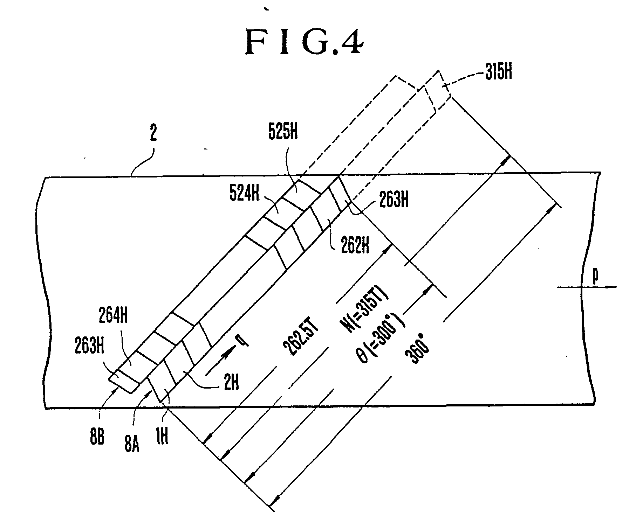

Figure 4 shows a recording pattern formed by recording a colour video signal with the embodiment. The rotary head 5A first comes into contact with the magnetic tape 2 to record a recording signal of one field in a range of the wrap angle θ, thereby forming a video track 8A. During this period of time, no recording current is supplied to the rotary head 5B. For the next one rotation, the recording current is supplied to only the rotary head 5B at the time period of the wrap angle θ, so that the recording signal of the next one field is recorded as a video track 8B.

These video tracks 8A and 8B coincide with the recording patterns formed by the standard VTR of the construction shown in Figure 3. That is to say, the lengths of the extending directions of the video tracks 8A and 8B and the angle to the length of the track relative to the length of the magnetic tape 2 are the same as those of the standard VTR. For this purpose, the wrap angle θ is set to a fixed value.

It is necessary to record the video signals in the 525/2 horizontal intervals (NTSC form) and 625/2 horizontal intervals (CCIR form) of one field in the video tracks 8A and 8B. Assuming that the magnetic tape 2 has been wrapped around the tape guide drum 1 at an angle of 360°, it is necessary to record N (NTSC form) and M (CCIR form), where N and M are integers, horizontal intervals. Therefore, the wrap angle θ satisfies the following equations

$$\frac{360°}{\theta} \times \frac{525}{2} = N$$

$$\frac{360°}{\theta} \times \frac{625}{2} = M$$

For example, if θ is 300°, then N is 315 and M is 375. In other words, with reference to Figures 1 and 4, in the range indicated by the broken lines in Figure 4, the magnetic tape 2 shown in Figure 1 does not come into contact with the tape guide drum 1, so no signal is recorded by the rotary heads 5A and 5B. Assuming that the magnetic tape 2 has been wrapped at 360° around the guide drum, the signals of 315 horizontal lines are recorded in the track 8A from the start point to the last point. 1H to 525H in Figure 4 indicate the horizontal lines recorded by a standard VTR. Each recording location of the horizontal sync signals in each of the tracks 8A and 8B is shifted by 0.25 horizontal time period from each other as specifically illustrated in Figure 4.

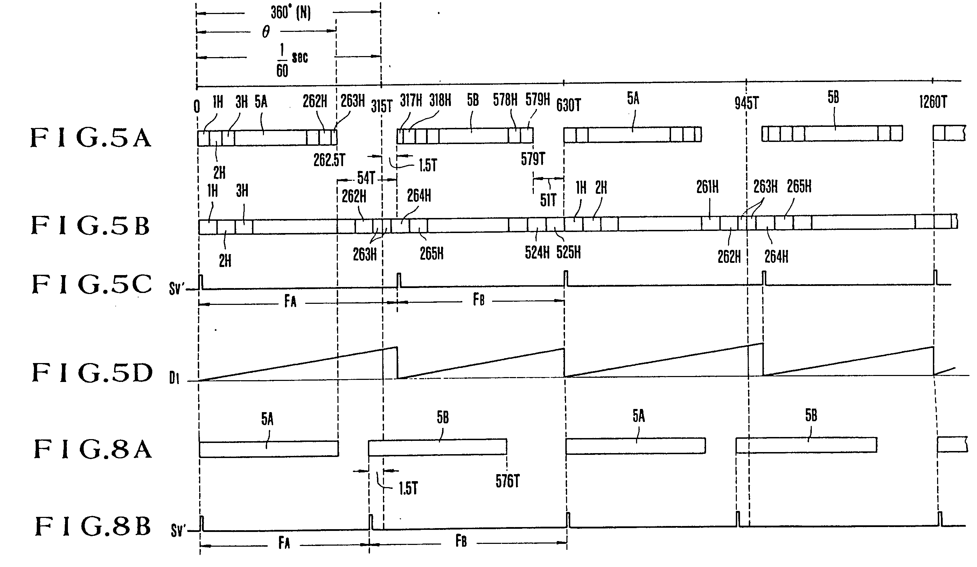

The operation will be now described with reference to Figure 5.

As described previously, the rotary heads 5A and 5B are rotated in one field period of time (1/60 sec) of a normal NTSC standard TV signal. Figures 5A to 5C show the time bases on the basis of the timing when the rotary head 5A comes to the location (the passing point of the guide post 3) corresponding to the first point in the range of the wrap angle θ. While the rotary head 5A scans in the range of the wrap angle θ, that is, 0 to 262.5 T on the time base, the recording signal corresponding to the video signal of one field from the camera is recorded as shown in Figure 5A, wherein the transverse axis of Figure 5A indicates the time base. If the rotary heads 5A and 5B were located at the same position a recording signal corresponding to the video signal of the next one field would be recorded from the time shown at 315 T on the time base.

However, as already mentioned, the rotary head 5B is provided at the location spaced at an angle α from the rotary head 5A, in Figure 5, the delayed time position. Thus, because of this, the recording signal corresponding to the video signal of the next field is recorded from the time delayed by 1.5 T from the time of 315 T.

The recording is again done by the rotary head 5A from the next time of 630 T, and similar operations are repeated. A field $F_A$ to be recorded by the rotary head 5A and a field $F_B$ to be recorded by the rotary head 5B are specified by a vertical sync signal $S_V'$ shown in Figure 5C.

Figure 5B shows the video signal recorded using an embodiment of the invention with a rotational period of 1/60 sec of the tape guide drum 1, and the transverse axis indicates the recording patterns on the magnetic track. These patterns are identical to those in, for example, Beta-format of standard type.

In Figure 5B, the recording signal indicated, for example, by the latter half of 263 H corresponds to the signal by 317 H on the time base whch is actually applied to the magnetic head 5B. The signal on the 579th horizontal line on the time base is recorded as the signal indicated by 525 H.

Figure 5D shows a vertical deflection current $D_I$ of a camera of special deflection scan type that will be described later. This current $D_I$ is a signal which is synchronized with the vertical sync pulse $S_V'$.

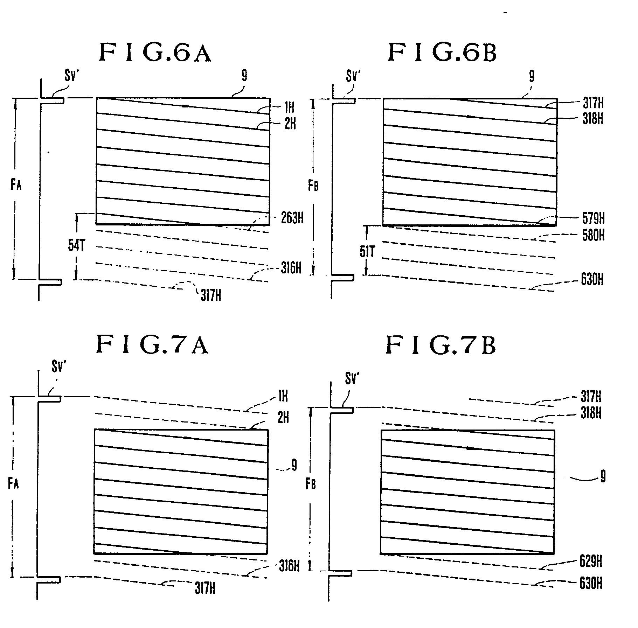

In an embodiment of the invention, the television camera and the VTR are driven by a common sync signal. As the television camera, it is possible to use a colour television camera of the single tube type in which a colour separation filter is arranged on the image pick-up surface of the image pick-up tube. A charge coupled device camera may alternatively be used as the colour television camera. Referring to Figures 6A and 6B, an effective screen 9 of the image pick-up surface is shown. The vertical scan of the image pick-up tube is synchronized with the vertical sync signal $S_V'$ shown in Figure 5C, and its horizontal deflection is synchronized with the horizontal sync signal of the frequency of 1/T.

As shown in Figure 6A, the horizontal scan is firstly performed 262.5 times in the field $F_A$; thereafter, as shown by the broken lines, the horizontal scan (over scan) is performed 54 times outside of the effective screen 9. In the field $F_B$, as

shown in Figure 6B, the horizontal scan is started from the upper central portion of the effective screen 9, and after the horizontal scan for 262.5 lines has been finished, the over scan is done 51 times as shown by the broken lines. The horizontal scan returns again to the upper left end portion of the effective screen 9 as shown in Figure 6A. It will be understood in Figures 6A and 6B that interlaced scanning is performed at the image pick-up tube. In Figures 6A and 6B, the scanning lines 1H to 630H are shown in correspondence with the deflection sync signal $S_V'$. For the deflecting method of Figure 6, as shown in Figures 7A and 7B, a deflecting apparatus may easily be designed by arranging the over scanning portions of an electron beam to be both the upper and lower portions of the effective screen 9.

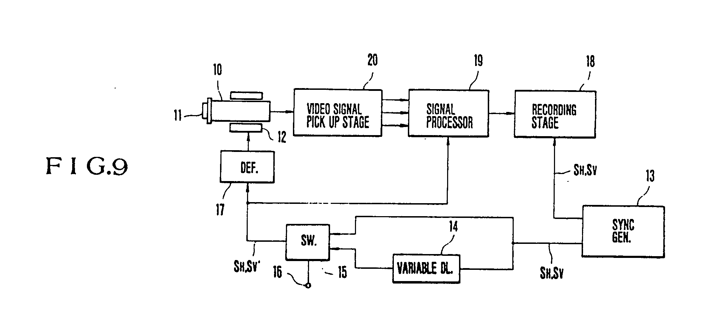

As another example, the rotary head 5B may be attached so that it is advanced by an angle α from the rotary head 5A. In such a case, as shown in Figure 8A, recording is done by the rotary head 5B for the time period of 262.5 T from the time which is advanced by 1.5 T from the time when the recording is started by the rotary head 5A. The vertical sync signal $S_V'$ at this time is shown in Figure 8B. The vertical deflection of the image pick-up tube is done synchronously with this vertical sync signal $S_V'$. Figures 8A and 8B show time charts on the same time bases as Figures 5A to 5C.

Colour video signals of the CCIR form in which the vertical frequency is 1/50 sec and the number of horizontal scanning lines is 625, can also be recorded in the same manner as the NTSC form described above. For example, although not shown, in the case where the rotary head 5B is delayed by only 1.5 T (wherein, a value of T is specified by the horizontal frequency of the CCIR form) relative to the rotary head 5A, the signal of one field is recorded by the rotary head 5A during the time period of 0 to 312.5 T, and then the signal of one field is recorded by the rotary head 5B during the time period of 312.5 T from the time of 375 T + 1.5 T.

Figure 9 shows the basic form of an embodiment of the invention. On the image pick-up surface of an image pick-up tube 10 is mounted a colour separation filter 11, and an electromagnetic or elastrostatic deflecting apparatus 12 is attached to the image pick-up tube 10.

A sync signal generator 13 forms sync signals such as the vertical sync signal $S_v$ and the horizontal sync signal $S_H$. The horizontal sync signal has a higher frequency $f_H'$ at a ratio of 360°/θ relative to the normal frequency. The sync signal from the sync signal generator 13 and a delayed signal derived by passing this synch signal through a variable delay circuit 14 are supplied to a switching circuit 15. The variable delay circuit 14 is adjustable around a predetermined delay. With the timing relation of Figure 5A, the sync signal having 315 T as one field is generated from the sync signal generator 13, and the variable delay circuit 14 has a delay with the central value of 1.5 T.

The switching circuit 15 alternately selects and supplies either of the sync signals $S_V$ and $S_H$ from the sync signal generator 13 and the sync signals transmitted through the variable delay circuit 14 in response to a control pulse of 1/60 sec supplied from a terminal 16. The change-over timing based on this control pulse is substantially half-way through the period during which the rotary head 5A is not in contact with the magnetic tape. This control pulse can be produced by the sync signal generator 13.

The output sync signals $S_V'$ and $S_H$ of the switching circuit 15 are supplied to a deflection circuit 17 of the image pick-up tube 10 and a signal processor 19. The vertical synch signal $S_V'$ between these sync signals is as shown in, for example, Figure 5C. The image pick-up tube 10 carries out the interlaced scanning as shown in Figures 6A and 6B. A recording stage 18 comprises a mechanical portion including the rotary heads and a servo circuit, and acts using the vertical synch signal of a constant period generated from the sync signal generator 13 as a servo reference. The servo circuit controls the rotational phases of the rotary heads 5A and 5B, so that the respective rotational phases of the rotary heads 5A and 5B and the phase of these vertical sync signal has a predetermined phase relation.

An output signal of the image pick-up tube 10 is supplied through a video signal pick-up stage 20 and the signal processor 19 to the recording stage 18. This signal processor 19 converts the output signal of the image pick-up tube 10 into a recording signal. For example, the luminance signal component is frequency modulated, and the carrier colour signal component is frequency modulated, and the carrier colour signal component is low-frequency converted and then processed in such a manner that the field in which the phase of the colour signal or carrier wave is inverted and the field in which this phase inversion processing is not performed are alternately repeated at every horizontal period, thereby producing the recording signal for a so-called Beta-format VTR consisting of the frequency modulated luminance signal and the low-frequency converted colour signal whose phase has been inverted. Instead of this phase inversion processing, it is possible to produce the recording signal using phase shift processing in which the phase of the carrier wave signal is changed by 90° at every horizontal period and the direction of this change of phase in adjacent fields is reversed.

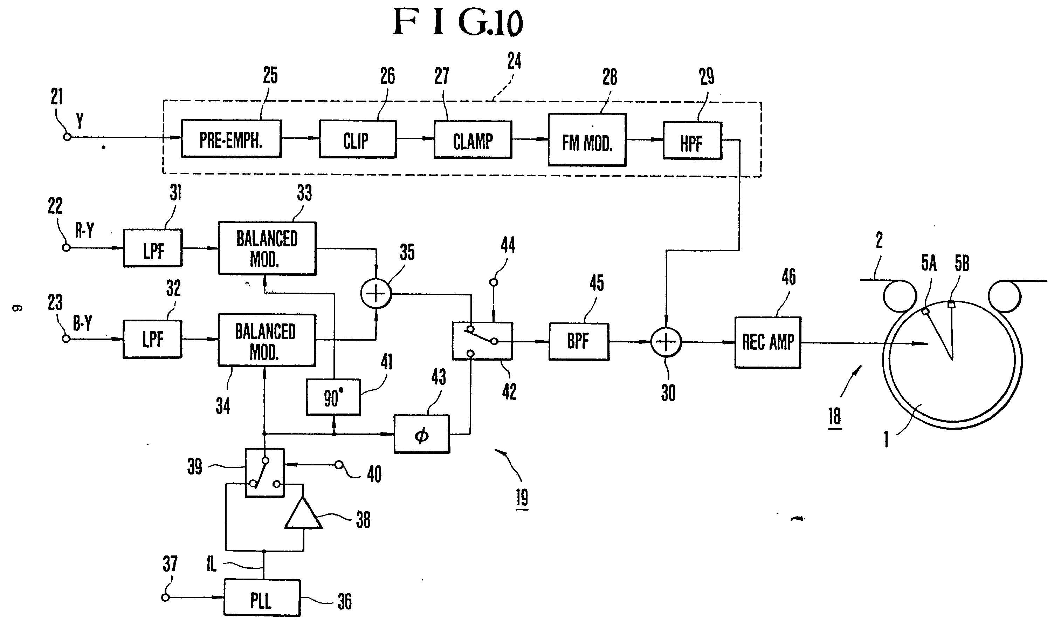

Figure 10 shows an example of the signal processor 19 to form the recording signal for a Beta-format VTR. A composite sync signal transmitted through the variable delay circuit 14 is supplied to the signal processor 19.

A luminance signal Y (to which the composite sync signal has been added) from the video signal pick-up stage 20 is supplied to an input terminal 21, and colour difference signals R—Y and B—Y are supplied to input terminals 22 and 23, respectively. The recording signal formed by the signal processor 19 as described below is supplied to the rotary heads 5A and 5B through a recording amplifier 46, a recording switch (not shown) and a rotary transformer (not shown) in the recording stage 18, and are then recorded on the magnetic tape 2.

The luminance signal Y is supplied to a luminance signal recording circuit 24 surrounded by the broken line in Figure 12. The recording circuit 24 comprises a pre-emphasis circuit 25, a clipping circuit 26, a clamping circuit 27, a frequency modulator 28, and a high-pass filter 29. At an output of the high-pass filter 29, a modulated luminance signal which has been frequency modulated so that the sync clip level and white peak become predetermined frequencies, respectively, appears, and this signal is supplied to a mixer 30.

The colour difference signals R—Y and B—Y are supplied through low-pass filters 31 and 32 to balanced modulators 33 and 34, respectively. Outputs of the balanced modulators 33 and 34 are supplied to a mixer 35. A phase locked loop (PLL) circuit 36 generates a carrier signal of a frequency $f_L$, for example, 175/4 $f_H'$ (about 688 kHz) on the basis of a horizontal sync signal from a terminal 37.

This carrier signal and the carrier signal whose phase was inverted by a phase inverter 38 are supplied to an input terminal of a switching circuit 39. The switching circuit 39 is controlled by switching pulses from a terminal 40. These switching pulses have a constant level in the period of the field $F_A$ while the recording signal is supplied to the rotary head 5A, and the level of the pulse is inverted every 1 T in the period of the field $F_B$ in which the recording signal is supplied to the rotary head 5B. Thus, the phase of the carrier signal becomes constant in the field $F_A$ and the phase thereof is inverted every 1 T in the field $F_A$. Due to the phase control of the carrier signal in this way, it is possible to eliminate cross-talk with respect to colour signals from the adjacent tracks by means of a comb filter provided in the reproducing circuit. The switching pulses from the terminal 40 are produced from the vertical and horizontal sync signals generated by the sync signal generator 13.

The carrier signal output from the switching circuit 39 is supplied to the balanced modulator 34 and at the same time, its phase is shifted by 90° by a phase shifter 41 and is supplied to the balanced modulator 33. This phase shifter 41 is used to form the carrier colour signal for quadrature phase modulation.

An output of the mixer 35 is supplied to one input terminal of a switching circuit 42. A burst signal having a predetermined phase due to the phase shifter 41 is supplied to the other input terminal of the switching circuit 42. The switching circuit 42 is controlled by switching pulses from a terminal 44, and the signal to which the burst signal was added appears at an output of the switching circuit 42. The colour signal which has been converted into the low-band carrier frequency including this burst signal is supplied through a band-pass filter 45 to the mixer 30 and is mixed with the modulated luminance signal mentioned previously. The recording signal is now supplied through the amplifier 46 to the heads 5A and 5B.

The recording signal formed by the signal processor 19 shown in Figure 10 is recorded on the magnetic tape 2 by the rotary heads 5A and 5B. This recorded signal is played back by a standard VTR in which two rotary heads 7A and 7B are spaced 180° apart as shown in Figure 3. Upon this playback, the cross-talk of the luminance signal component between the adjacent tracks is suppressed. The colour signal of the reproduced low-band carrier frequency is frequency-converted into the signal having a standard colour sub-carrier frequency $f_{sc}$ of the NTSC form and is then supplied to the comb filter. The cross-talk of the colour signal between the adjacent tracks is eliminated by this comb filter. That is, the comb filter is formed in such a manner that the subtraction is carried out between the signal which was delayed by 1 H and the signal which is not delayed. That is to say, the cross-talk is eliminated using the fact that the phase of the reproduced signal from the track between the two adjacent tracks is inverted at every horizontal interval and the phase of the reproduced signal from the other tracks are not inverted.

It is possible to compensate the attachment error of the gap distance G of two rotary heads 5A and 5B by means of the above-mentioned variable delay circuit 14. That is to say, since the rotary heads 5A and 5B are stuck together as shown in Figure 2, if the gap distance G of both heads is not such as to cause a time difference of 1.5 T or 1 T, it is impossible mechanically to adjust this misalignment. Therefore, this compensation is electrically performed by the variable delay circuit 14. To record television signals of ordinary frequencies from a television tuner using an embodiment of recording apparatus according to the invention, the television signals may be time-compressed using semiconductor devices, so as to have the same horizontal and vertical synchronous relation as the input signal form the image pick-up tube 10, thereby obtaining signals similar to those of Figure 5A as described previously.

The value of m is not limited to one but may be two, so as to cause a time difference of 2.5 T in the case of Figures 5A to 5D.

With embodiments of the invention, it is possible to produce a recording format which can be reproduced without any difficulty by a standard VTR having two rotary heads spaced at an angle of 180°, using for the recording tape a guide drum having a small diameter, thereby permitting miniaturization of the VTR. Moreover, interlaced scanning of the image pick-up tube can be achieved by setting the angular distance of the two rotary heads for performing the oblique azimuth recording.

## Claims

1. A video signal recording apparatus comprising a tape guide drum (1) around which a magnetic tape (2) is to be wrapped and a first and a second rotary head (5A, 5B) arranged to come into contact with said magnetic tape (2) substantially simultaneously, the extending directions of transducing gaps of said heads (5A, 5B) being different from each other, and the initial time when said first and second rotary heads (5A, 5B) respectively come into contact with said magnetic tape (2) being synchronized with a vertical sync signal of a recording signal to be supplied from a camera (10, 20), thereby recording said recording signal on said magnetic tape (2); characterized in that:

the wrap angle θ of said magnetic tape (2) around said tape guide drum is selected so that:

$$\frac{360°}{\theta} \times \frac{625}{2} = M$$

or

$$\frac{360°}{\theta} \times \frac{525}{2} = N$$

where M and N are integers; and so that:

an angular distance α between the gaps of said first and second rotary heads (5A, 5B) is selected so as to cause a time difference of $(m + 0.5)T$, where m is an integer and T is a time corresponding to one horizontal period.

2. A recording apparatus according to claim 1, wherein θ = 300°, N = 315, M = 375 and m = 1.

3. A recording apparatus according to claim 1 or claim 2 for recording an output colour video signal of a colour video camera (10, 20) and wherein a carrier signal of low-band frequency and whose phase or frequency has been controlled so as not to cause interference due to cross-talk between adjacent tracks (8A, 8B), is balanced-modulated by a colour signal of said output signal, a luminance signal of said output signal is frequency modulated, and said balanced-modulated colour signal and said frequency modulated luminance signal are mixed and recorded on said magnetic tape (2) field by field by said first and second rotary heads (5A, 5B).

## Patentansprüche

1. Videosignal-Aufzeichnungsgerät

mit einer Bandführungstrommel (1), um die ein Magnetband (2) geschlungen wird,

sowie mit einem ersten und einem zweiten rotierenden Kopf (5A, 5B), die so angeordnet sind, daß sie im wesentlichen gleichzeitig mit dem Magnetband (2) in Kontakt kommen, wobei die Wandler-Luftspalte dieser Köpfe (5A, 5B) in unterschiedlichen Richtungen verlaufen und die Anfangszeit, in der der erste bzw. der zweite rotierende Kopf (5A, 5B) mit dem Magnetband (2) in Kontakt kommen, mit einem Vertikal-Synchronisiersignal eines von einer Kamera (10, 20) zuzuführenden Aufzeichnungssignal synchronisiert ist, wodurch das Aufzeichnungssignal auf dem Magnetband (2) aufgezeichnet wird,

dadurch gekennzeichnet,

daß der Umschlingungswinkel θ des Magnetbandes (2) um die Bandführungstrommel (1) so gewählt ist, daß

$$\frac{360°}{θ} \times \frac{625}{2} = M$$

oder $$\frac{360°}{θ} \times \frac{525}{2} = N,$$

worin M und N ganzzahlig sind,

und daß die Winkeldifferenz α zwischen den Luftspalten des ersten und des zweiten rotierenden Kopfes (5A, 5B), so gewählt ist, daß sie eine Zeitdifferenz von (m + 0,5)T verursacht, worin m ganzzahlig ist und T die einer Zeilenperiode entsprechende Zeit ist.

2. Aufzeichnungsgerät nach Anspruch 2, bei dem θ = 300°, N = 315, M = 375 und m = 1.

3. Aufzeichnungsgerät nach Anspruch 1 oder 2 zum Aufzeichnen des Farbvideo-Ausgangssignals einer Farbvideokamera (10, 20), bei dem ein in einem niedrigen Frequenzband liegendes Trägersignal, dessen Phase oder Frequenz so gesteuert ist, daß keine Störung durch Übersprechen zwischen benachbarten Spuren (8A, 8B) verursacht wird, durch ein Farbartsignal des genannten Ausgangssignals gegentaktmoduliert wird, das Luminanzsignal des Ausgangssignals frequenzmoduliert wird und das gegentaktmodulierte Farbartsignal und das frequenzmodulierte Luminanzsignal gemischt und von dem ersten und dem zweiten rotierenden Kopf (5A, 5B) auf dem Magnetband (2) Halbbild für Halbbild aufgezeichnet werden.

**Revendications**

1. Appareil d'enregistrement de signal vidéo, comprenant un tambour (1) de guidage de bande autour duquel une bande magnétique (2) est destinée à s'enrouler, et une première et une seconde tête rotative (5A, 5B) destinées à venir au contact de la bande magnétique (2) de manière pratiquement simultanée, les directions des entrefers transducteurs des têtes (5A, 5B) étant différentes l'une de l'autre, le moment initial auquel la première et la seconde tête rotative (5A, 5B) viennent au contact de la bande magnétique (2) étant synchronisé sur un signal de synchronisation verticale d'un signal d'enregistrement transmis par une caméra (10, 20), si bien que le signal d'enregistrement est enregistré sur la bande magnétique (2),

caractérisé en ce que

l'angle d'enroulement θ de la bande magnétique (2) autour du tambour de guidage est choisi de manière que

$$\frac{360°}{θ} \times \frac{625}{2} = M$$

ou $$\frac{360°}{θ} \times \frac{525}{2} = N,$$

M et N étant des nombres entiers

et en ce que la distance angulaire α des entrefers de la première et de la seconde tête rotative (5A, 5B) est choisie afin que la différence de temps soit égale à (m + 0,5)T, m étant un nombre entier et T un temps correspondant à une période horizontale.

2. Appareil d'enregistrement selon la revendication 1, dans lequel θ = 300°, N = 315, M = 375 et m = 1.

3. Appareil d'enregistrement selon la revendication 1 ou 2, destiné à l'enregistrement d'un signal vidéo en couleurs provenant d'une caméra vidéo en couleurs (10, 20), et dans lequel un signal de porteuse compris dans une bande de basses fréquences et dont la phase ou la fréquence a été réglée de manière que la diaphonie entre des pistes adjacentes (8A, 8B) ne crée pas d'interférence, subit une modulation compensée par un signal de chrominance du signal de sortie, un signal de luminance du signal de sortie est modulé en fréquence, et le signal de chrominance modulé et compensé et le signal de luminance modulé en fréquence sont mélangés et enregistrés sur la bande magnétique (2) trame par trame par la première et la seconde tête rotative (5A, 5B).

# F I G.1

# F I G.2

# F I G.3

1

# FIG.4

EP 0 102 811 B1

360° (N)

θ

$\frac{1}{60}$ sec

0  1H  3H  5A    262H  263H 315T 317H 318H  5B  578H 579H 630T    5A        945T      5B      1260T

FIG.5A

2H
262.5T    54T    1.5T        579T    51T

1H  3H        262H    264H        1H  2H        261H    263H 265H

FIG.5B

2H        263H    265H        524H 525H        262H  264H

FIG.5C sv'

FA        FB

FIG.5D D1

5A        5B        5A        5B

FIG.8A

1.5T    576T

FIG.8B sv'

FA        FB

# FIG.6A

# FIG.6B

# FIG.7A

# FIG.7B

4

FIG.9

# F I G.10